# EUROPÄISCHE PATENTSCHRIFT

(11) **EP 3 600 973 B1**
(45) Veröffentlichungstag und Bekanntmachung des Hinweises auf die Patenterteilung: **16.06.2021**
(21) Anmeldenummer: 18710019.3
(22) Anmeldetag: 07.03.2018
(51) Int. Cl.: B60R 21/0134, B60R 21/0136, B60R 21/34

(54) **VORRICHTUNG ZUM AUSLÖSEN EINER EXTERNEN SCHUTZFUNKTION**
DEVICE FOR TRIGGERING AN EXTERNAL PROTECTION FUNCTION
PROCÉDÉ PERMETTANT DE DÉCLENCHER UNE FONCTION DE PROTECTION EXTERNE

(30) Priorität: 21.03.2017 DE 102017204681
(43) Veröffentlichungstag der Anmeldung: 05.02.2020
(73) Patentinhaber: Robert Bosch GmbH, 70442 Stuttgart (DE)
(72) Erfinder: FREIENSTEIN, Heiko, 71263 Weil Der Stadt (DE); KOLATSCHEK, Josef, 71263 Weil Der Stadt (DE)
(86) Internationale Anmeldenummer: PCT/EP2018/055589
(87) Internationale Veröffentlichungsnummer: WO 2018/172075

(56) Entgegenhaltungen:
- EP-A1- 0 913 751
- EP-A1- 1 792 788
- WO-A1-2005/077720
- WO-A1-2006/084884
- WO-A1-2013/020739
- WO-A2-01/96147
- DE-A1-102008 043 637
- KR-A- 20110 058 279
- KR-A- 20140 134 395

## Beschreibung

### Stand der Technik

Die Erfindung betrifft eine Vorrichtung und ein Verfahren zum Auslösen mindestens einer externen Schutzfunktion für ein Kraftfahrzeug zum Schutz von externen, besonders schützenswerten Verkehrsteilnehmern, insbesondere zum Schutz von Fußgängern.

Moderne Kraftfahrzeuge weisen üblicherweise Sensoren auf, durch die Kollisionen mit Objekten im Umfeld des Kraftfahrzeugs vor und/oder nach erfolgter Kollision erkannt werden können. Auch sind Maßnahmen bekannt, Fußgänger im Falle einer Kollision zu schützen. Derartige Maßnahmen werden üblicherweise aktiviert, sobald die Kollision durch die Sensoren erkannt worden ist. Die Auslösung erfolgt aber oft zu spät, so dass Fußgänger nicht immer wirksam geschützt werden können. Insbesondere in Fällen, in denen ein Fußgänger unmittelbar vor dem Kraftfahrzeug beispielsweise aus einer Parklücke auf eine Straße tritt, ist ein wirksamer Schutz des Fußgängers oft nicht möglich.

Die DE 10 2008 043637 A1 Erfindung offenbart beispielsweise ein Verfahren zur Aktivierung und/oder Ansteuerung von mindestens einem Schutzsystem in einem Fahrzeug, wobei zur Erkennung eines Primäraufpralls unfallrelevante Informationen erfasst und ausgewertet werden und wobei nach einem erkannten Primäraufprall eine erste Auslöseentscheidung für das mindestens eine Schutzsystem getroffen wird

### Offenbarung der Erfindung

Hier wird eine besonders vorteilhafte Vorrichtung zum Auslösen mindestens einer externen Schutzfunktion für ein Kraftfahrzeug zum Schutz von externen, besonders schützenswerten Verkehrsteilnehmern, insbesondere zum Schutz von Fußgängern vorgestellt.

Die beschriebene Vorrichtung ist bevorzugt in einem Kraftfahrzeug angeordnet und dazu bestimmt und eingerichtet, Verkehrsteilnehmer, die sich außerhalb des Kraftfahrzeugs befinden, zu schützen. Derartige Verkehrsteilnehmer werden hier als externe Verkehrsteilnehmer bezeichnet. Insbesondere Fußgänger sind besonders schützenswerte externe Verkehrsteilnehmer, weil für diese bei einer Kollision mit einem Kraftfahrzeug regelmäßig eine erhebliche Verletzungsgefahr besteht. Besonders schützenswerte Verkehrsteilnehmer sind darüber hinaus auch Fahrradfahrer, Rollerfahrer und Motorradfahrer. Den besonders schützenswerten Verkehrsteilnehmern ist gemein, dass sie sich außerhalb von einem sie schützenden Fahrzeug befinden. Mit der beschriebenen Vorrichtung können insbesondere externe Verkehrsteilnehmer wirksam geschützt werden, die sich mit nur geringer Geschwindigkeit bewegen. Das sind vor allem Fußgänger.

Die Vorrichtung weist eine Steuereinheit zum Auswerten von Sensordaten von einer ersten Sensoranordnung zum Sensieren von Kollisionsobjekten und zur Ausgabe eines ersten Auslösesignals für die mindestens eine externe Schutzfunktion auf. Bevorzugt umfasst die erste Sensoranordnung einen oder mehrere Sensoren, die an einer gemeinsamen oder an unterschiedlichen Stellen des Kraftfahrzeugs angeordnet sind. Die Sensoren der ersten Sensoranordnung sind bevorzugt dazu bestimmt und eingerichtet, insbesondere in ihrer Gesamtheit eine bereits erfolgte oder noch bevorstehende Kollision mit einem Kollisionsobjekt zu erkennen.

Die erste Sensoranordnung ist bevorzugt mit der Steuereinheit verbunden, so dass die Sensordaten der ersten Sensoranordnung (bzw. Signale der Sensoren der ersten Sensoranordnung) von der Steuereinheit ausgewertet werden können. Unter Auswertung der Signale ist hier insbesondere zu verstehen, dass aus den mit den Sensoren gemessenen Signalen bestimmt wird, ob eine Kollision mit einem Kollisionsobjekt stattgefunden hat oder stattfinden wird, wobei bevorzugt auch Informationen betreffend Art, Zeitpunkt und Schwere der Kollision bestimmt werden. Insbesondere ist es bevorzugt, dass die Steuereinheit mit einer Vielzahl von Sensoren der ersten Sensoranordnung verbunden ist und dass aus der Vielzahl der dadurch zur Verfügung stehenden Information durch die Steuereinheit eine Entscheidung getroffen wird, ob eine Kollision stattgefunden hat beziehungsweise stattfinden wird.

Das Kraftfahrzeug weist bevorzugt die durch die beschriebene Vorrichtung auszulösende mindestens eine externe Schutzfunktion zum Schutz von externen, besonders schützenswerten Verkehrsteilnehmern auf. Dabei kann es sich beispielsweise um einen Fußgängerairbag handeln, der sich zum Schutz eines Fußgängers insbesondere im Bereich einer Windschutzscheibe des Kraftfahrzeugs ausbreiten kann. Auch kann die externe Schutzfunktion eine Verstellvorrichtung für eine Motorhaube des Kraftfahrzeugs umfassen. Dabei wird die Motorhaube derart verstellt, dass ein Aufprall eines Fußgängers gedämpft wird. Weiterhin kann durch die mindestens eine externe Schutzfunktion eine automatische Notbremsung durchgeführt werden.

Darüber hinaus weist das Kraftfahrzeug bevorzugt eine Mehrzahl von internen Schutzfunktionen auf, über die Insassen des Kraftfahrzeugs geschützt werden können. Dazu zählen insbesondere Rückhaltesysteme wie beispielsweise Airbags oder Gurtstraffer. Bevorzugt sind sowohl die internen als auch die mindestens eine externe Schutzfunktion mit der Steuereinheit verbunden. Durch die Steuereinheit wird bevorzugt entschieden, ob und wenn ja welche Schutzfunktionen im Falle einer erkannten Kollision ausgelöst werden. Insbesondere ist die Steuereinheit dazu bestimmt und eingerichtet, im Falle einer erkannten Kollision mit einem besonders schützenswerten externen Verkehrsteilnehmer ein erstes Auslösesignal für die mindestens eine externe Schutzfunktion auszugeben. Das erste Auslösesignal kann bevorzugt von der mindestens einen externen Schutzfunktion empfangen werden, wodurch die mindestens eine externe Schutzfunktion ausgelöst wird.

Die Auslösung der mindestens einen externen Schutzfunktion über die Steuereinheit und die erste Sensoranordnung kann für einen wirksamen Schutz des zu schützenden externen Verkehrsteilnehmers eine zu große Zeit in Anspruch nehmen. Insbesondere deshalb weist die beschriebene Vorrichtung eine Hilfssteuereinheit zum Auswerten von Sensordaten von einer zweiten Sensoranordnung zum Sensieren von Kollisionsobjekten und zur direkten Ausgabe eines zweiten Auslösesignals für die mindestens eine externe Schutzfunktion auf. Die zweite Sensoranordnung ist bevorzugt dazu bestimmt und eingerichtet, Kollisionsobjekte im Umfeld des Kraftfahrzeugs zu sensieren. Die von der zweiten Sensoranordnung aufgenommenen und ausgegebenen Sensordaten können von der Hilfssteuereinheit ausgewertet werden. Dabei kann von der Hilfssteuereinheit direkt ein zweites Auslösesignal für die mindestens eine externe Schutzfunktion ausgegeben werden, wenn ein Kollisionsobjekt erkannt wurde. Dabei ist die Hilfssteuereinheit derart eingerichtet, dass die Steuereinheit beim Ausgeben des zweiten Auslösesignals umgangen wird. Das bedeutet, dass die zweite Sensoranordnung bevorzugt derart ausgeführt ist, dass das zweite Auslösesignal von der Hilfssteuereinheit unmittelbar in einer solchen Form ausgegeben werden kann, dass die mindestens eine externe Schutzfunktion das zweite Auslösesignal empfangen und derart verarbeiten kann, dass dadurch die mindestens eine externe Schutzfunktion ausgelöst wird. Durch die direkte Verbindung zwischen der Hilfssteuereinheit und der mindestens einen externen Schutzfunktion kann die mindestens eine externe Schutzfunktion besonders schnell ausgelöst werden. Das wird insbesondere dadurch begünstigt, dass die Steuereinheit umgangen wird. Die Hilfssteuereinheit ist dazu bevorzugt über eine direkte Verbindung mit der mindestens einen externen Schutzfunktion verbunden. Die direkte Verbindung kann auch als ein Bypass der Steuereinheit betrachtet werden. Die zweite Sensoranordnung kann auch mit der Steuereinheit verbunden sein. Bevorzugt gibt die zweite Sensoranordnung dabei Signale (auch) an die Steuereinheit ab, so dass die durch die zweite Sensoranordnung gewonnenen Informationen auch für weitere Maßnahmen verwendet werden können. Auch das zweite Auslösesignal wird von der Hilfssteuereinheit bevorzugt an die Steuereinheit geleitet. Dabei ist es bevorzugt, dass durch eine Kommunikation zwischen der Hilfssteuereinheit und der Steuereinheit das Ausgeben des zweiten Auslösesignals an die mindestens eine Schutzfunktion nicht verzögert wird.

Durch die beschriebene Vorrichtung kann die mindestens eine Schutzfunktion insbesondere bereits vor einer Kollision ausgelöst werden. Damit kann eine größere Gestaltungsfreiheit für eine Vorderseite des Kraftfahrzeugs ermöglicht werden. Ein wirksamer Schutz von Fußgängern ist bei einer langsamen Auslösung nur dann möglich, wenn die Vorderseite des Kraftfahrzeugs eine im Wesentlichen waagerecht angeordnete Motorhaube aufweist. Kommt es zu einer Kollision mit einem Fußgänger, wird dieser zwar zunächst beispielsweise an den Beinen erfasst. Die Zeit, bis der Kopf des Fußgängers beispielsweise auf die Windschutzscheibe aufschlägt, kann dabei aber ausreichen, um nach einer verhältnismäßig langsamen Methode beispielsweise ein Fußgängerairbag auszulösen. Mit der beschriebenen Vorrichtung, die eine besonders schnelle Auslösung der mindestens einen externen Schutzfunktion ermöglicht, kann ein wirksamer Schutz von Fußgängern insbesondere auch bei einer flachen Fahrzeugfront (die beispielsweise sogar im Wesentlichen senkrecht zu einer Straßenoberfläche angeordnet ist) erreicht werden.

Wird die mindestens eine externe Schutzfunktion ausgelöst, kann dadurch insbesondere das Sichtfeld des Fahrers eingeschränkt sein. Das ist beispielsweise bei einem die Windschutzscheibe überdeckenden Fußgängerairbag der Fall. Wird eine derartige externe Schutzfunktion ausgelöst, wird bevorzugt zumindest ein Fahrassistenzsystem aktiviert. Dadurch kann beispielsweise automatisiert eine Spur gehalten werden (so dass ein Verreißen des Steuers durch den Fahrer unterdrückt wird), ein automatisiertes Ausweichmanöver und/oder eine automatisierte Notbremsung durchgeführt werden. Durch ein derartiges Eingreifen kann verhindert werden, dass es durch die Auslösung beispielsweise eines Fußgängerairbags zu weiterem Schaden kommt, weil dem Fahrer die Sicht genommen ist. Auch ist es bevorzugt, dass durch Auslösung der mindestens einen externen Schutzfunktion ein System zum autonomen Fahren aktiviert wird (sofern dieses nicht bereits aktiv ist). Dabei übernimmt eine elektronische Steuerung die Fahraufgabe vollständig und steuert das Kraftfahrzeug insbesondere derart, dass ein weiterer Schaden verhindert wird.

In einer bevorzugten Ausführungsform der Vorrichtung umfasst die erste Sensoranordnung sowohl mindestens einen Umfeldsensor als auch mindestens einen Kontaktsensor.

Eine Kollision mit einem Fußgänger kann insbesondere mit einem an der Vorderseite (beispielsweise an und unter einer Motorhaube) des Kraftfahrzeuges angeordneten Kontaktsensor erkannt werden. Bei dem Kontaktsensor kann es sich insbesondere um einen Beschleunigungssensor handeln, mit dem möglichst früh eine schwache Beschleunigung gemessen werden kann, die bei einer Kollision mit einem Fußgänger auftritt. Mit einem Kontaktsensor kann eine bereits stattgefundene Kollision erkannt werden. Um auch eine bevorstehende Kollision erkennen zu können, umfasst die erste Sensoranordnung auch den mindestens einen Umfeldsensor. Der Umfeldsensor ist dazu bestimmt und eingerichtet, das Umfeld des Kraftfahrzeugs derart zu überwachen, dass mögliche Kollisionsobjekte erkannt werden können und dass eine Prognose abgegeben werden kann, ob eine Kollision mit einem erkannten möglichen Kollisionsobjekt bevorsteht. Dazu wird bevorzugt aus einer jeweiligen Bewegung der möglichen Kollisionsobjekte eine jeweilige erwartete Trajektorie für alle erfassten möglichen Kollisionsobjekte ermittelt und mit einer erwarteten Trajektorie des Kraftfahrzeugs verglichen.

In einer weiteren bevorzugten Ausführungsform der Vorrichtung umfasst die erste Sensoranordnung mindestens einen Sensor von einem der folgenden Sensortypen:
- optischer Sensor,
- Video-Sensor,
- Ultraschallsensor,
- kapazitiver Sensor, und
- induktiver Sensor.

Bei dem optischen Sensor kann es sich beispielsweise um einen Infrarotsensor und/oder um einen Lidarsensor handeln. Auch kann der optische Sensor dazu bestimmt und eingerichtet sein, von einem Laser ausgesendetes und an einem Objekt reflektiertes Laserlicht zu empfangen. Der Video-Sensor kann insbesondere nach Art einer Video-Kamera ausgeführt sein. Dabei kann der Video-Sensor für Helligkeit und/oder für Farben sensitiv sein. Von dem Ultraschallsensor kann eine Ultraschallwelle ausgesendet und nach Reflexion von einem Objekt empfangen werden. Durch Laufzeitmessung der (bevorzugt gepulsten) Ultraschallwelle kann der Abstand zwischen dem Objekt und dem Sensor bestimmt werden. Der kapazitive Sensor umfasst zumindest einen Kondensator. Der kapazitive Sensor kann insbesondere als ein Abstandssensor ausgeführt sein, bei dem der Kondensator zwischen einer Elektrode des kapazitiven Sensors und einem (zumindest teilweise elektrisch leitfähigen) Objekt im Umfeld des Sensors ausgebildet ist. Durch Messung der Kapazität des so gebildeten Kondensators kann der Abstand zwischen dem kapazitiven Sensor und dem Objekt in dessen Umfeld abgeschätzt werden. Ein induktiver Sensor umfasst zumindest eine Spule beispielsweise aus Kupferdraht. Durch diese kann ein magnetisches Feld erzeugt werden. Ein Objekt im Umfeld des Sensors kann das magnetische Feld verändern, wodurch das Objekt durch eine Messung des Magnetfelds erfassbar ist.

In einer weiteren bevorzugten Ausführungsform der Vorrichtung ist die zweite Sensoranordnung zur Überwachung eines Nahbereichs, der sich insbesondere bis zu 5 m [Metern] vor dem Kraftfahrzeug erstreckt, eingerichtet.

Mit der ersten Sensoranordnung in Verbindung mit der Steuereinheit können Kollisionsobjekte im Umfeld des Kraftfahrzeugs besonders zuverlässig erkannt werden. Dabei können besonders detaillierte Informationen (beispielsweise hinsichtlich Größe, Form, Geschwindigkeit, Klassifizierung, Dichte und/oder Bewegungsrichtung) über das Kollisionsobjekt erfasst werden. Insbesondere können in der Steuereinheit eine Vielzahl von Informationen ausgewertet und verglichen werden. Beispielsweise kann ein Signal eines ersten Sensors der ersten Sensoranordnung durch Vergleich mit einem Signal eines zweiten Sensors der ersten Sensoranordnung auf Plausibilität überprüft werden. Weiterhin kann in der Steuereinheit aus einer Vielzahl von Schutzfunktionen ausgewählt werden, welche in einer bestimmten erfassten Situation in welcher Reihenfolge und zu welchem Zeitpunkt auszulösen sind, damit die Insassen des Kraftfahrzeugs und mögliche externe Verkehrsteilnehmer optimal geschützt werden. Durch die erste Sensoranordnung in Verbindung mit der Steuereinheit kann also ein an eine bestimmte Situation optimal angepasster Schutz für alle Beteiligten erreicht werden. Dazu ist allerdings ein erheblicher Rechenaufwand erforderlich, der entsprechende Zeit benötigt. Tritt ein Kollisionsobjekt erst kurz vor einer bevorstehenden Kollision in den überwachten Bereich des Umfelds vor dem Kraftfahrzeug ein, kann eine erforderliche Auslösung der mindestens einen externen Schutzfunktion möglicherweise mit der ersten Sensoranordnung in Verbindung mit der Steuereinheit nicht schnell genug ausgelöst werden. Das kann beispielsweise der Fall sein, wenn ein Fußgänger unmittelbar vor dem Kraftfahrzeug aus einer Parklücke oder einer Lücke zwischen zwei nebeneinander geparkten Fahrzeugen auf die Straße tritt. Insbesondere für einen solchen Fall ist die zweite Sensoranordnung mit der Hilfssteuereinheit vorgesehen.

Das durch die beschriebene Vorrichtung überwachte Umfeld des Kraftfahrzeugs ist bevorzugt in einen Nahbereich und einen Fernbereich unterteilt. Von der ersten Sensoranordnung wird bevorzugt insbesondere der Fernbereich überwacht. Ein Kollisionsobjekt, das in hinreichend großem Abstand vor dem Kraftfahrzeug in den überwachten Bereich eintritt, wird bevorzugt durch die erste Sensoranordnung erfasst, wobei die dabei zur Verfügung stehenden umfangreichen Informationen durch die Steuereinheit verarbeitet werden, so dass der optimale Schutz für alle Beteiligten erreicht wird. In dem Fall verbleibt für die erforderlichen aufwendigen Berechnungen genug Zeit. Tritt das Kollisionsobjekt allerdings in den Nahbereich vor dem Kraftfahrzeug, so kann die verbleibende Zeit bis zur Kollision zu kurz sein. In dem Fall wird die mindestens eine externe Schutzfunktion bevorzugt durch die Hilfssteuereinheit unmittelbar ausgelöst, ohne dass aufwendige Berechnungen in der Steuereinheit oder in anderen elektronischen Komponenten durchgeführt werden.

Unter dem Nahbereich ist bevorzugt der Bereich vor dem Kraftfahrzeug zu verstehen, der sich von der Vorderseite des Kraftfahrzeugs bis 5 m [Meter], insbesondere nur bis 3 m vor dem Kraftfahrzeug erstreckt. Diese vergleichsweise kurze Distanz resultiert aus der städtischen Geschwindigkeit von ca. 50 km/h und einer kurzen Aktivierungszeit potentieller Fußgänger-Außenairbags von weniger als 100ms. Seitlich erstreckt sich der Nahbereich bevorzugt zumindest über die volle Breite des Kraftfahrzeugs. Auch ist bevorzugt, dass sich der Nahbereich als ein Kreisausschnitt mit einem Radius im Bereich von 3 m bis 5 m und mit einem nach vorne (also vor das Kraftfahrzeug) gerichteten Öffnungswinkel im Bereich von 120° bis 180° [Grad] erstreckt. Der Fernbereich umfasst zumindest den Bereich, der an den Nahbereich anschließt. Der Nahbereich und der Fernbereich können teilweise überlappen. Auch ist es möglich, dass der Nahbereich ein Teilbereich des Fernbereichs ist, so dass auch der Fernbereich an der Vorderseite des Kraftfahrzeugs beginnt. In dem Fall kann ein Kollisionsobjekt in unmittelbarer Nähe vor dem Kraftfahrzeug das Auslösen sowohl des ersten als auch des zweiten Auslösesignals für die mindestens eine externe Schutzfunktion bewirken. Dabei ist allerdings zu erwarten, dass das erste Auslösesignal die mindestens eine externe Schutzfunktion erst nach dem zweiten Auslösesignal erreicht, also wenn die mindestens eine externe Schutzfunktion bereits ausgelöst wurde. Das erste Auslösesignal ist in dem Fall aber nicht schädlich. Bei einer Fehlfunktion der zweiten Sensoranordnung (oder der Hilfssteuereinheit) kann das zweite Auslösesignal ausbleiben. In dem Fall kann die mindestens eine externe Schutzfunktion zumindest noch (später) durch das erste Auslösesignal ausgelöst werden.

In einer weiteren bevorzugten Ausführungsform der Vorrichtung umfasst die zweite Sensoranordnung mindestens einen Line-Scanner.

Der Line-Scanner ist bevorzugt dazu bestimmt und eingerichtet, für eine Vielzahl von in einer Ebene liegenden Messpunkten (die auch kontinuierlich verteilt sein können) im Umfeld des Line-Scanners einen Abstand zwischen dem Sensor und einem in dem Umfeld des Line-Scanners angeordneten Objekts zu messen. Mit dem Line-Scanner kann also entlang einer Linie ein Abstandprofil des Umfelds des Line-Scanners erfasst werden. Der Line-Scanner umfasst bevorzugt einen in das Umfeld des Line-Scanners ausgerichteten Laser, dessen Ausrichtung kontinuierlich entlang der zu vermessenden Linie verändert werden kann. Der Laser weist bevorzugt eine nicht sichtbare Wellenläge und eine für Menschen unbedenkliche Lichtintensität auf. Mit einem optischen Sensor, der insbesondere für die Wellenlänge des Lasers sensitiv ist, kann Licht erfasst werden, das von dem Laser ausgesendet und von einem Objekt in dessen Umfeld reflektiert worden ist. Durch eine Laufzeitmessung des Laserlichts kann erfasst werden, in welchem Abstand sich ein Objekt vor dem Laser befindet. Dazu kann das Laserlicht beispielsweise gepulst ausgesendet werden.

Mit dem Line-Scanner können insbesondere Kollisionsobjekte im Nahbereich vor dem Kraftfahrzeug besonders schnell erkannt werden. Entsprechend kann die Auslösung der mindestens einen externen Schutzfunktion durch die Hilfssteuereinheit besonders schnell erfolgen. Außerdem kann ein Line-Scanner besonders einfach ausgeführt sein, wodurch Kosten eingespart werden können. Das ist insbesondere deshalb vorteilhaft, wenn der Line-Scanner lediglich zur Auslösung der mindestens einen externen Schutzfunktion bei im Nahbereich erkannten Kollisionsobjekten dient. Gerade bei Bauteilen wie dem Line-Scanner, die nur einem einzelnen Zweck dienen, kann eine günstige Ausführung aus wirtschaftlichen Gründen erforderlich sein.

In einer weiteren bevorzugten Ausführungsform der Vorrichtung weist der Line-Scanner mindestens einen ansteuerbaren Umlenkspiegel auf, mit welchem mindestens ein Laserstrahl des Line-Scanners derart umgelenkt werden kann, dass der mindestens eine Laserstrahl einen Abtastbereich vor dem Kraftfahrzeug abtasten kann.

In dieser Ausführungsform ist der Laser des Line-Scanners bevorzugt ortsfest gehalten, wobei die Verstellung der Ausrichtung des Laserstrahls durch den Umlenkspiegel erreicht werden kann. Der Umlenkspiegel kann insbesondere kleiner und leichter ausgeführt sein als der Laser, so dass der Umlenkspiegel besonders schnell verstellt werden kann. Damit kann eine besonders hohe Abtastrate erreicht werden. Der Umlenkspiegel ist bevorzugt derart ansteuerbar, dass dieser durch ein elektronisches Signal verstellt werden kann. Bevorzugt ist das elektronische Signal periodisch ausgeführt, so dass der Umlenkspiegel kontinuierlich die Ausrichtung des Laserstrahls entlang der abzutastenden Linie verstellt.

Der mit dem Laserstrahl abtastbare Abtastbereich vor dem Kraftfahrzeug umfasst bevorzugt zumindest den Nahbereich und ist insbesondere bevorzugt mit dem Nahbereich identisch.

In einer weiteren bevorzugten Ausführungsform der Vorrichtung umfasst die zweite Sensoranordnung mindestens zwei Line-Scanner, die zumindest teilweise überlappende Abtastbereiche aufweisen.

Es ist bevorzugt, dass die Abtastbereiche derart angeordnet sind, dass diese in ihrer Gesamtheit den Nahbereich vollständig abdecken. Dabei ist insbesondere bevorzugt, dass die Abtastung der jeweiligen Abtastbereiche durch die einzelnen Line-Scanner in einer gemeinsamen Ebene erfolgt. Wird der Nahbereich von mehr als einem Line-Scanner abgetastet, kann eine besonders hohe Abtastrate erreicht werden, weil mit jedem der Line-Scanner nur ein Teilbereich des Nahbereichs abgetastet werden muss.

Insbesondere ist bevorzugt, dass die mindestens zwei Line-Scanner an einer Vorderseite des Kraftfahrzeuges angeordnet sind und jeweils dazu eingerichtet sind, einen nach vorne geöffneten Winkelbereich im Bereich von 90° bis 120° [Grad] im Umfeld des Kraftfahrzeugs abzutasten, wobei zentral vor der Vorderseite des Kraftfahrzeugs ein Überlappungsbereich existiert, in welchem sich die Abtastbereiche der beiden Line-Scanner überlappen. Bevorzugt ist dabei, dass der von beiden Line-Scannern insgesamt abgetastete Bereich einen Winkelbereich von 180° vor dem Kraftfahrzeug abdeckt. Bevorzugt ist an beiden vorderen Ecken des Kraftfahrzeugs (beispielsweise im Bereich der Scheinwerfer) jeweils ein Line-Scanner vorgesehen.

Es ist möglich, dass zwischen den Abtastbereichen der einzelnen Line-Scanner ein Bereich ausgebildet ist, der von keinem der Line-Scanner abgedeckt wird. Bevorzugt ist ein derartiger Bereich nur derart unmittelbar vor der Vorderseite des Kraftfahrzeugs ausgebildet, dass ein Schutz von externen Verkehrsteilnehmern, die erst in diesem Bereich erfasst werden, ohnehin nicht möglich ist. Beispielsweise kann sich ein derartiger Bereich bis zu 50 cm [Zentimeter] vor das Kraftfahrzeug erstrecken.

In einer weiteren bevorzugten Ausführungsform der Vorrichtung umfasst die zweite Sensoranordnung mehrere übereinander angeordnete Line-Scanner, die jeweils dazu eingerichtet sind, verschiedene Ebenen abzutasten, um Konturmerkmale von Kollisionsobjekten zu erkennen.

In dieser Ausführungsform ist es bevorzugt, dass mit jedem der mehreren Line-Scanner jeweils der gesamte Nahbereich abgetastet werden kann. Alternativ ist es bevorzugt, dass mehrere Line-Scanner derart angeordnet sind, dass mit diesen in ihrer Gesamtheit der gesamte Nahbereich auf mehreren verschiedenen Ebenen abgetastet werden kann. Dabei handelt es sich um eine Kombination der Merkmale dieser Ausführungsform und der Merkmale der zuvor beschriebenen Ausführungsform.

Die verschiedenen Ebenen weisen bevorzugt eine gemeinsame Schnittachse auf, die parallel zu der Vorderseite des Kraftfahrzeugs und zu einer Straßenoberfläche verläuft. Das bedeutet, dass mit jedem der Line-Scanner eine Linie parallel zu der Straßenoberfläche abgetastet werden kann, wobei die verschiedenen Linien der verschiedenen Line-Scanner auf unterschiedlichen Höhen oberhalb der Straßenoberfläche liegen. Durch Abtasten verschiedener Ebenen können die Konturmerkmale der Kollisionsobjekte im Umfeld des Kraftfahrzeugs erkannt werden. Insbesondere kann so auch eine Größe der Kollisionsobjekte erfasst werden. Bevorzugt wird das zweite Auslösesignal von der Hilfssteuereinheit nur ausgegeben, wenn ein Kollisionsobjekt mit einer Mindestgröße durch die zweite Sensoranordnung erfasst wurde. Damit kann sichergestellt werden, dass die mindestens eine externe Schutzfunktion nicht fälschlicherweise ausgelöst wird. Beispielsweise kann als Bedingung festgelegt sein, dass das zweite Auslösesignal nur in dem Fall von der Hilfssteuereinheit ausgegeben wird, wenn ein Kollisionsobjekt in den Signalen von mindestens zwei der Line-Scanner erkannt wurde, so dass auf eine entsprechende Mindestgröße des Kollisionsobjekts geschlossen werden kann. Eine derart einfache Bedingung kann ohne zeitaufwendigen Rechenaufwand insbesondere in der Hilfssteuereinheit geprüft werden.

In einer weiteren bevorzugten Ausführungsform der Vorrichtung weist die Hilfssteuereinheit eine Latenzzeit von der Sensierung eines Kollisionsobjektes mit der zweiten Sensoranordnung bis zur Auslösung eines zweiten Auslösesignals von höchstens 80 ms, insbesondere von höchstens 50 ms [Millisekunden] auf.

Das erste Erfassen des Kollisionsobjekts ist dabei definiert als das erste Messen von Laserlicht, das von dem Kollisionsobjekt reflektiert wurde. Das bedeutet, dass von der Latenzzeit beispielsweise insbesondere die Zeit für die Erzeugung eines elektrischen Signals aus dem empfangenen reflektierten Laserlicht in der zweiten Sensoranordnung, für die Verarbeitung dieses elektrischen Signals in der Hilfssteuereinheit, für die Entscheidung zum Auslösen der mindestens einen externen Schutzfunktion in der Hilfssteuereinheit und für die Erzeugung und Übertragung des zweiten Auslösesignals an die mindestens eine externe Schutzfunktion umfasst sind.

Beträgt die Latenzzeit beispielsweise 80 ms, so bewegt sich das Kraftfahrzeug bei einer Geschwindigkeit von 50 km/h über eine Strecke von etwas mehr als einem Meter. Einschließlich der Zeit zum Auslösen der mindestens einen externen Schutzfunktion (von beispielsweise 30 ms) kann also bei einem 1,5 m vor dem Kraftfahrzeug erfassten Kollisionsobjekt die mindestens eine externe Schutzfunktion noch hinreichend schnell ausgelöst werden.

Eine wie beschrieben kurze Latenzzeit der Hilfssteuereinheit kann insbesondere aufgrund der Verwendung des Line-Scanners in der zweiten Sensoranordnung erreicht werden. Die Latenzzeit kann insbesondere durch die Ausführung des Line-Scanners beeinflusst werden.

Gemäß der Erfindung weist die Hilfssteuereinheit eine Latenzzeit von der Sensierung eines Kollisionsobjektes mit der zweiten Sensoranordnung bis zur Auslösung eines zweiten Auslösesignals auf, die höchstens halb so groß ist wie eine Latenzzeit der Steuereinheit von der Sensierung eines Kollisionsobjektes mit der ersten Sensoranordnung bis zur Auslösung eines ersten Auslösesignals.

Bei der Auslösung von Schutzfunktionen ist zwischen einer besonders detaillierten Auswertung der zur Verfügung stehenden Informationen und einer besonders schnellen Auslösung abzuwägen. Je mehr Zeit für die Auswertung der Informationen verwendet wird, umso besser kann die Auslösung der Schutzfunktionen an die vorliegende Situation angepasst werden. Auch können Fehlauslösungen durch eine besonders genaue Auswertung der Informationen besonders gut verhindert werden. Demgegenüber kann mit einer schnellen Auslösung ohne aufwendige Auswertung der Informationen ein Schutz auch bei sehr kurzer verfügbarer Zeit ermöglicht werden. Bei der beschriebenen Vorrichtung kann durch die erste Sensoranordnung in Verbindung mit der Steuereinheit eine umfangreiche Analyse der Daten durchgeführt werden, wodurch die entsprechenden Vorteile erzielt werden können. Zudem kann aber mit der zweiten Sensoranordnung in Verbindung mit der Hilfssteuereinheit in den Fällen eingegriffen werden, in denen die erste Sensoranordnung und die Steuereinheit nicht schnell genug reagieren können.

Dementsprechend ist es bevorzugt, dass die Latenzzeiten der Steuereinheit und der Hilfssteuereinheit unterschiedlich groß sind. In Versuchen hat sich gezeigt, dass es besonders vorteilhaft ist, wenn die Latenzzeit der Hilfssteuereinheit höchstens halb so groß (insbesondere genau halb so groß) ist wie die Latenzzeit der Steuereinheit.

Als ein weiterer Aspekt wird ein Verfahren zum Auslösen mindestens einer externen Schutzfunktion für ein Kraftfahrzeug zum Schutz von externen, besonders schützenswerten Verkehrsteilnehmern, insbesondere zum Schutz von Fußgängern, vorgestellt.

Die weiter vorne für die Vorrichtung beschriebenen besonderen Vorteile und Ausgestaltungsmerkmale sind auf das beschriebene Verfahren anwendbar und übertragbar, und umgekehrt. Insbesondere ist es bevorzugt, dass das beschriebene Verfahren mit einer Vorrichtung durchgeführt wird, die wie beschrieben ausgeführt wird.

In Schritt a) des beschriebenen Verfahrens werden erste Sensordaten zum Sensieren von Kollisionsobjekten mit einer Steuereinheit ausgewertet. Bevorzugt werden die ersten Sensordaten mit der weiter oben beschriebenen ersten Sensoranordnung aufgenommen. In Schritt b) werden zweite Sensordaten zum Sensieren von Kollisionsobjekten mit einer Hilfssteuereinheit ausgewertet. Bevorzugt werden die zweiten Sensordaten mit der weiter oben beschriebenen zweiten Sensoranordnung aufgenommen. Die Verfahrensschritte a) und b) werden bevorzugt zeitgleich und insbesondere bevorzugt über eine gesamte Betriebsdauer des Kraftfahrzeugs (also von Einschalten der Verbrennungskraftmaschine bis zum Ausschalten der Verbrennungskraftmaschine) durchgeführt.

In Schritt c) wird durch die Steuereinheit ein erstes Auslösesignal für die mindestens eine externe Schutzfunktion ausgegeben, wenn in Schritt a) ein Kollisionsobjekt erkannt wurde. In Schritt d) wird durch die Hilfssteuereinheit ein zweites Auslösesignal für die mindestens eine externe Schutzfunktion direkt ausgegeben, wenn in Schritt b) ein Kollisionsobjekt erkannt wurde. Bei der Ausgabe des zweiten Auslösesignals wird die Steuereinheit umgangen. Die Ausgabe des ersten Auslösesignals in Schritt c) erfolgt insbesondere nur in dem Fall, dass ein Kollisionsobjekt mit der ersten Sensoranordnung erkannt wurde. Die Ausgabe des zweiten Auslösesignals in Schritt d) erfolgt insbesondere nur in dem Fall, dass ein Kollisionsobjekt mit der zweiten Sensoranordnung erkannt wurde. Beim Betrieb des Kraftfahrzeugs werden daher regelmäßig nur die Schritte a) und b) durchgeführt. Nur im Falle einer bevorstehenden oder erfolgten Kollision werden die Schritte c) und/oder d) zusätzlich durchgeführt. Durch das Umgehen der Steuereinheit beim Ausgeben des zweiten Auslösesignals kann davon ausgegangen werden, dass das zweite Auslösesignal regelmäßig schneller ausgegeben wird als das erste Auslösesignal. Insbesondere deshalb kann es Situationen geben, in denen neben den Schritten a) und b) nur Schritt d) durchgeführt wird.

Hier auch beschrieben werden sollen Computerprogramm, welches dazu eingerichtet ist alle Schritte des beschriebenen Verfahrens durchzuführen und ein maschinenlesbares Speichermedium auf dem dieses Computerprogramm gespeichert ist.

Weitere Einzelheiten der beschriebenen Vorrichtung und ein Ausführungsbeispiel werden anhand der Zeichnung näher erläutert. Die möglichen Ausführungsformen der beschriebenen Vorrichtung sind nicht auf das in der Zeichnung dargestellte Ausführungsbeispiel beschränkt.

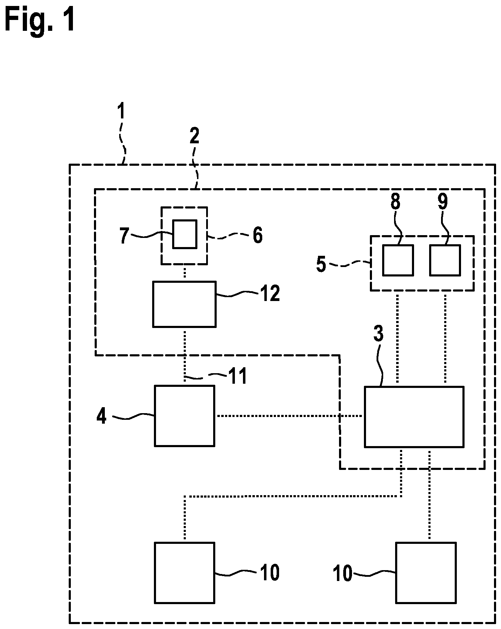

Fig. 1 zeigt eine Vorrichtung 2 zum Auslösen einer externen Schutzfunktion 4 für ein Kraftfahrzeug 1 zum Schutz von externen, besonders schützenswerten Verkehrsteilnehmern, insbesondere zum Schutz von Fußgängern. Die Vorrichtung 2 weist eine Steuereinheit 3 zum Auswerten von Sensordaten von einer ersten Sensoranordnung 5 zum Sensieren von Kollisionsobjekten und zur Ausgabe eines ersten Auslösesignals für die mindestens eine externe Schutzfunktion 4 sowie eine Hilfssteuereinheit 12 zum Auswerten von Sensordaten von einer zweiten Sensoranordnung 6 zum Sensieren von Kollisionsobjekten und zur direkten Ausgabe eines zweiten Auslösesignals für die mindestens eine externe Schutzfunktion 4 auf. Die Auslösung des ersten Auslösesignals beziehungsweise des zweiten Auslösesignals erfolgt, wenn ein Kollisionsobjekt erkannt wurde. Die Hilfssteuereinheit 12 ist derart eingerichtet, dass die Steuereinheit 3 bei der Ausgabe des zweiten Auslösesignals umgangen wird.

Die erste Sensoranordnung 5 umfasst sowohl einen Umfeldsensor 8 als auch einen Kontaktsensor 9. Die zweite Sensoranordnung 6 ist zur Überwachung eines Nahbereichs, der sich insbesondere innerhalb von 5 m [Metern] vor dem Kraftfahrzeug 1 erstreckt, eingerichtet. Die zweite Sensoranordnung 6 umfasst einen Line-Scanner 7 oder einen anderen Sensor für den Nahbereich. Außerdem sind die zweite Sensoranordnung 6 und die Hilfssteuereinheit 12 derart ausgeführt, dass eine Latenzzeit von der Sensierung eines Kollisionsobjektes mit der zweiten Sensoranordnung 6 bis zur Auslösung eines zweiten Auslösesignals höchstens 80 ms [Millisekunden] beträgt. Eine Latenzzeit der Steuereinheit 3 von der Sensierung eines Kollisionsobjektes mit der ersten Sensoranordnung 5 bis zur Auslösung eines ersten Auslösesignals beträgt 160 ms [Millisekunden].

Weiterhin weist das Kraftfahrzeug 1 zwei interne Schutzfunktionen 10 auf, über die Insassen des Kraftfahrzeugs 1 geschützt werden können. Über die Steuereinheit 3 können mit der ersten Sensoranordnung 5 erfasste Daten ausgewertet werden, wobei durch eine umfassende Analyse entschieden wird, ob das erste Auslösesignal zum Auslösen der externen Schutzfunktion 4 ausgegeben wird. Eine derartige umfassende Analyse kann zu lange dauern, als dass die externe Schutzfunktion 4 rechtzeitig (also insbesondere vor der Kollision) ausgelöst werden könnte. Die Hilfssteuereinheit 12 und darüber auch die zweite Sensoranordnung 6 sind über eine direkte Verbindung 11 direkt mit der externen Schutzfunktion 4 verbunden. Das zweite Auslösesignal kann also direkt von der Hilfssteuereinheit 12 zur externen Schutzfunktion 4 geleitet werden, wobei die Steuereinheit 3 umgangen wird. Damit kann die externe Schutzfunktion 4 über das zweite Auslösesignal schneller ausgelöst werden als über das erste Auslösesignal.

## Patentansprüche

1. Vorrichtung (2) zum Auslösen mindestens einer externen Schutzfunktion (4) für ein Kraftfahrzeug (1) zum Schutz von externen, besonders schützenswerten Verkehrsteilnehmern, insbesondere zum Schutz von Fußgängern aufweisend eine Steuereinheit (3) zum Auswerten von Sensordaten von einer ersten Sensoranordnung (5) zum Sensieren von Kollisionsobjekten und zur Ausgabe eines ersten Auslösesignals für die mindestens eine externe Schutzfunktion (4), sowie eine Hilfssteuereinheit (12) zum Auswerten von Sensordaten von einer zweiten Sensoranordnung (6) zum Sensieren von Kollisionsobjekten und zur direkten Ausgabe eines zweiten Auslösesignals für die mindestens eine externe Schutzfunktion (4), wenn ein Kollisionsobjekt erkannt wurde, wobei die Hilfssteuereinheit (12) derart eingerichtet ist, dass die Steuereinheit (3) bei der Ausgabe des zweiten Auslösesignals umgangen wird, wobei die Hilfssteuereinheit (12) eine Latenzzeit von der Sensierung eines Kollisionsobjektes mit der zweiten Sensoranordnung (6) bis zur Auslösung eines zweiten Auslösesignals aufweist, die höchstens halb so groß ist wie eine Latenzzeit der Steuereinheit (3) von der Sensierung eines Kollisionsobjektes mit der ersten Sensoranordnung (5) bis zur Auslösung eines ersten Auslösesignals.

2. Vorrichtung (2) nach Anspruch 1, wobei die erste Sensoranordnung (5) sowohl mindestens einen Umfeldsensor (8) als auch mindestens einen Kontaktsensor (9) umfasst.

3. Vorrichtung (2) nach einem der vorhergehenden Ansprüche, wobei die erste Sensoranordnung (5) mindestens einen Sensor von einem der folgenden Sensortypen umfasst:
- optischer Sensor,
- Video-Sensor,
- Ultraschallsensor,
- kapazitiver Sensor, und
- induktiver Sensor.

4. Vorrichtung (2) nach einem der vorhergehenden Ansprüche, wobei die zweite Sensoranordnung (6) zur Überwachung eines Nahbereichs, der sich insbesondere innerhalb von 5 m [Metern] vor dem Kraftfahrzeug (1) erstreckt, eingerichtet ist.

5. Vorrichtung (2) nach einem der vorhergehenden Ansprüche, wobei die zweite Sensoranordnung (6) mindestens einen Line-Scanner (7) umfasst.

6. Vorrichtung (2) nach Anspruch 5, wobei der Line-Scanner (7) mindestens einen ansteuerbaren Umlenkspiegel aufweist, mit welchem mindestens ein Laserstrahl des Line-Scanners (7) derart umgelenkt werden kann, dass der mindestens eine Laserstrahl einen Abtastbereich vor dem Kraftfahrzeug (1) abtasten kann.

7. Vorrichtung (2) nach einem der Ansprüche 5 oder 6, wobei die zweite Sensoranordnung (6) mindestens zwei Line-Scanner (7) umfasst, die zumindest teilweise überlappende Abtastbereiche aufweisen.

8. Vorrichtung (2) nach einem der Ansprüche 5 bis 7, wobei die zweite Sensoranordnung (6) mehrere übereinander angeordnete Line-Scanner (7) umfasst, die jeweils dazu eingerichtet sind, verschiedene Ebenen abzutasten, um Konturmerkmale von Kollisionsobjekten zu erkennen.

9. Vorrichtung (2) nach einem der vorhergehenden Ansprüche, wobei die Hilfssteuereinheit (12) eine Latenzzeit von der Sensierung eines Kollisionsobjektes mit der zweiten Sensoranordnung (6) bis zur Auslösung eines zweiten Auslösesignals von höchstens 80 ms [Millisekunden] aufweist.

10. Verfahren zum Auslösen mindestens einer externen Schutzfunktion (4) für ein Kraftfahrzeug (1) zum Schutz von externen, besonders schützenswerten Verkehrsteilnehmern, insbesondere zum Schutz von Fußgängern, umfassend zumindest die folgenden Verfahrensschritte:
e) mit einer Steuereinheit Auswerten von ersten Sensordaten zum Sensieren von Kollisionsobjekten,
f) mit einer Hilfssteuereinheit Auswerten von zweiten Sensordaten zum Sensieren von Kollisionsobjekten,
g) durch die Steuereinheit Ausgeben eines ersten Auslösesignals für die mindestens eine externe Schutzfunktion (4), wenn in Schritt a) ein Kollisionsobjekt erkannt wurde, und
h) durch die Hilfssteuereinheit direktes Ausgeben eines zweiten Auslösesignals für die mindestens eine externe Schutzfunktion (4), wenn in Schritt b) ein Kollisionsobjekt erkannt wurde, wobei die Steuereinheit (3) bei der Ausgabe des zweiten Auslösesignals umgangen wird, wobei die Hilfssteuereinheit (12) eine Latenzzeit von der Sensierung eines Kollisionsobjektes mit der zweiten Sensoranordnung (6) bis zur Auslösung eines zweiten Auslösesignals aufweist, die höchstens halb so groß ist wie eine Latenzzeit der Steuereinheit (3) von der Sensierung eines Kollisionsobjektes mit der ersten Sensoranordnung (5) bis zur Auslösung eines ersten Auslösesignals.

11. Computerprogramm, welches eingerichtet ist, alle Schritte des Verfahrens nach Anspruch 10 auszuführen.

12. Maschinenlesbares Speichermedium, auf dem das Computerprogramm nach Anspruch 11 gespeichert ist.

## Claims

1. Apparatus (2) for triggering at least one external protection function (4) for a motor vehicle (1) for protecting external road users worthy of particular protection, in particular for protecting pedestrians, comprising a control unit (3) for evaluating sensor data from a first sensor arrangement (5) for sensing collision objects and for outputting a first trigger signal for the at least one external protection function (4), and an auxiliary control unit (12) for evaluating sensor data from a second sensor arrangement (6) for sensing collection objects and for directly outputting a second trigger signal for the at least one external protection function (4) should a collision object be identified, wherein the auxiliary control unit (12) is set up in such a way that the control unit (3) is circumvented when outputting the second trigger signal, wherein the auxiliary control unit (12) has a latency time between sensing a collision object by the second sensor arrangement (6) and triggering a second trigger signal that is no more than half as long as a latency time of the control unit (3) between sensing a collision object by the first sensor arrangement (5) and triggering a first trigger signal.

2. Apparatus (2) according to Claim 1, wherein the first sensor arrangement (5) comprises both at least one surround sensor (8) and at least one contact sensor (9).

3. Apparatus (2) according to either of the preceding claims, wherein the first sensor arrangement (5) comprises at least one sensor of the following sensor types:
- optical sensor,
- video sensor,
- ultrasonic sensor,
- capacitive sensor and
- inductive sensor.

4. Apparatus (2) according to any one of the preceding claims, wherein the second sensor arrangement (6) is set up for monitoring the near region which, in particular, extends within 5 m [metres] in front of the motor vehicle (1).

5. Apparatus (2) according to any one of the preceding claims, wherein the second sensor arrangement (6) comprises at least one line scanner (7).

6. Apparatus (2) according to Claim 5, wherein the line scanner (7) comprises at least one controllable deflection mirror, by means of which at least one laser beam of the line scanner (7) can be deflected in such a way that the at least one laser beam can scan a scanning region in front of the motor vehicle (1) .

7. Apparatus (2) according to either of Claims 5 and 6, wherein the second sensor arrangement (6) comprises at least two line scanners (7), which have at least partly overlapping scanning regions.

8. Apparatus (2) according to any one of Claims 5 to 7, wherein the second sensor arrangement (6) comprises a plurality of line scanners (7) arranged one above the other, each of which is set up to scan different levels in order to identify contour features of collision objects.

9. Apparatus (2) according to any one of the preceding claims, wherein the auxiliary control unit (12) has a latency time between sensing a collision object by the second sensor arrangement (6) and triggering a second trigger signal of no more than 80 ms [milliseconds] .

10. Method for triggering at least one external protection function (4) for a motor vehicle (1) for protecting external road users worthy of particular protection, in particular for protecting pedestrians, comprising at least the following method steps:
e) evaluating first sensor data by way of a control unit, for the purposes of sensing collision objects,
f) evaluating second sensor data by way of a control unit, for the purposes of sensing collision objects,
g) outputting a first trigger signal for the at least one external protection function (4) by way of the control unit should a collision object have been identified in step a) and
h) directly outputting the second trigger signal for the at least one external protection function (4) by way of the auxiliary control unit should a collision object have been identified in step b), wherein the control unit (3) is circumvented when outputting the second trigger signal, wherein the auxiliary control unit (12) has a latency time between sensing a collision object by the second sensor arrangement (6) and triggering a second trigger signal that is no more than half as long as a latency time of the control unit (3) between sensing a collision object by the first sensor arrangement (5) and triggering a first trigger signal.

11. Computer program set up to carry out all steps of the method according to Claim 10.

12. Machine-readable storage medium, on which the computer program according to Claim 11 is stored.

## Revendications

1. Dispositif (2) de déclenchement d'au moins une fonction de protection extérieure (4) d'un véhicule automobile (1) pour protéger des usagers de la route extérieurs, notamment à protéger, notamment pour protéger des piétons, ledit dispositif comportant une unité de commande (3) destinée à évaluer des données de capteur d'un premier ensemble de capteurs (5) destiné à détecter des objets de collision et à émettre un premier signal de déclenchement de l'au moins une fonction de protection extérieure (4), ainsi qu'une unité de commande auxiliaire (12) destinée à évaluer des données de capteur d'un deuxième ensemble de capteurs (6) destiné à détecter des objets de collision et à émettre directement un deuxième signal de déclenchement de l'au moins une fonction de protection extérieure (4) si un objet de collision a été détecté, l'unité de commande auxiliaire (12) étant conçue de telle manière que l'unité de commande (3) est manipulée lorsque le deuxième signal de déclenchement est émis, l'unité de commande auxiliaire (12) présentant, entre la détection d'un objet de collision avec le deuxième ensemble de capteurs (6) et le déclenchement d'un deuxième signal de déclenchement, un temps de latence qui est égal au plus à la moitié du temps de latence de l'unité de commande (3) entre la détection d'un objet de collision avec le premier ensemble de capteurs (5) jusqu'au déclenchement d'un premier signal de déclenchement.

2. Dispositif (2) selon la revendication 1, le premier ensemble de capteurs (5) comprenant aussi bien au moins un capteur d'environnement (8) qu'au moins un capteur de contact (9).

3. Dispositif (2) selon l'une des revendications précédentes, le premier ensemble de capteurs (5) comprenant au moins un capteur de l'un des types de capteur suivants :
- capteur optique,
- capteur vidéo,
- capteur à ultrasons,
- capteur capacitif et
- capteur inductif.

4. Dispositif (2) selon l'une des revendications précédentes, le deuxième ensemble de capteurs (6) étant conçu pour surveiller une zone proche qui s'étend notamment à moins de 5 m [mètres] devant le véhicule automobile (1).

5. Dispositif (2) selon l'une des revendications précédentes, le deuxième ensemble de capteurs (6) comprenant au moins un scanner à balayage lignes (7).

6. Dispositif (2) selon la revendication 5, le scanner à balayage lignes (7) comportant au moins un miroir de déviation commandable permettant de dévier au moins un faisceau laser du scanner à balayage lignes (7) de telle sorte que l'au moins un faisceau laser puisse balayer une zone de balayage située devant le véhicule automobile (1).

7. Dispositif (2) selon l'une des revendications 5 et 6, le deuxième ensemble de capteurs (6) comprenant au moins deux scanners à balayage lignes (7) qui comportent des zones de balayage qui se chevauchent au moins partiellement.

8. Dispositif (2) selon l'une des revendications 5 à 7, le deuxième ensemble de capteurs (6) comprenant une pluralité de scanners à balayage lignes (7) disposés les uns au-dessus des autres et qui sont chacun conçus pour balayer différents plans afin de détecter les caractéristiques de contour des objets de collision.

9. Dispositif (2) selon l'une des revendications précédentes, l'unité de commande auxiliaire (12) présentant, entre la détection d'un objet de collision avec le deuxième ensemble de capteurs (6) et le déclenchement d'un deuxième signal de déclenchement, un temps de latence d'au plus 80 ms [millisecondes].

10. Procédé de déclenchement d'au moins une fonction de protection extérieure (4) d'un véhicule automobile (1) pour protéger les usagers de la route extérieurs, notamment à protéger, notamment pour protéger les piétons, ledit procédé comprenant au moins les étapes suivantes :
e) utiliser une unité de commande pour évaluer les premières données de capteur afin de détecter des objets de collision,
f) utiliser une unité de commande auxiliaire pour évaluer des deuxièmes données de capteur afin de détecter des objets de collision,
g) utiliser l'unité de commande pour émettre un premier signal de déclenchement de l'au moins une fonction de protection extérieure (4) lorsqu'un objet de collision a été détecté à l'étape a), et
h) utiliser l'unité de commande auxiliaire pour émettre directement un deuxième signal de déclenchement de l'au moins une fonction de protection extérieure (4) lorsqu'un objet de collision a été détecté à l'étape b), l'unité de commande (3) étant manipulée lorsque le deuxième signal de déclenchement est émis,
l'unité de commande auxiliaire (12) présentant, entre la détection d'un objet de collision avec le deuxième ensemble de capteurs (6) et le déclenchement d'un deuxième signal de déclenchement, un temps de latence qui est au plus égal à la moitié du temps de latence de l'unité de commande (3) entre la détection d'un objet de collision avec le premier ensemble de capteurs (5) et le déclenchement d'un premier signal de déclenchement.

11. Logiciel conçu pour réaliser toutes les étapes du procédé selon la revendication 10.

12. Support de stockage lisible par machine sur lequel est stocké le logiciel selon la revendication 11.
